# EUROPÄISCHE PATENTSCHRIFT

(11) **EP 2 868 953 B1**
(45) Veröffentlichungstag und Bekanntmachung des Hinweises auf die Patenterteilung: **15.02.2017**
(21) Anmeldenummer: 14190916.8
(22) Anmeldetag: 29.10.2014
(51) Int. Cl.: F16K 31/08, F16K 31/385

(54) **Ventil**
Valve
Soupape

(30) Priorität: 31.10.2013 DE 102013111998
(43) Veröffentlichungstag der Anmeldung: 06.05.2015
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- WO-A1-00/50795
- WO-A1-92/21906
- DE-U1- 29 820 432
- FR-A1- 2 244 952
- GB-A- 2 103 391
- US-A1- 2013 200 282

## Beschreibung

Die vorliegende Erfindung betrifft eine Steuereinheit mit einem Steuerelement zur Steuerung eines Ventils, insbesondere eines eigenmediumbetätigten Servoventils, und einer Schaltvorrichtung zur Betätigung des Steuerelements, die mit dem Steuerelement über einen durch Betätigung der Schaltvorrichtung zwischen zwei Endlagen umschaltbaren Magneten magnetisch gekoppelt ist. Einen weiteren Gegenstand der Erfindung bildet ein Ventil, insbesondere ein Servoventil, mit einem Ventilsitz, einem gegenüber dem Ventilsitz bewegbar angeordneten Schließelement und einer Steuereinheit. Schließlich betrifft die Erfindung auch ein Verfahren zur Steuerung eines Ventils, insbesondere eines Servoventils, mit einem Ventilsitz, einem gegenüber dem Ventilsitz bewegbar angeordneten Schließelement und einer Steuereinheit.

Derartige Steuereinheiten werden in der Ventiltechnik dazu eingesetzt, ein beispielsweise als eigenmediumbetätigtes Servoventil ausgebildetes Ventil mit vergleichsweise geringem Kraftaufwand zu steuern, d. h. dieses zu öffnen oder zu schließen.

Die Steuereinheiten verfügen zur Steuerung des Ventils üblicherweise über ein bewegbares Steuerelement, welches mit einem den Ventilsitz des Ventils verschließenden Schließelement zusammenwirkt. Zur Betätigung dieses Steuerelements weisen die Steuereinheiten als weiteren Bestandteil in der Regel Schaltvorrichtungen auf, über welche sich das Steuerelement zwischen zwei Endlagen umschalten lässt, wobei die eine Endlage des Steuerelements der Offenstellung des Ventils und die andere Endlage des Steuerelements der Schließstellung des Ventils entspricht.

Da das Steuerelement zumeist im mediumdurchströmten Bereich des Ventils angeordnet ist, haben sich in der Vergangenheit insbesondere solche Schaltvorrichtungen bewährt, die berührungslos mit dem Steuerelement gekoppelt sind. Denn durch eine berührungslose Kopplung lässt sich eine Medientrennung dahingehend erreichen, dass nur das Steuerelement im mediumdurchströmten Bereich des Ventils und die anderen Komponenten der Steuereinheit im trockenen, nicht durchströmten Bereich des Ventils angeordnet sind. Als besonders vorteilhaft hat sich dabei herausgestellt, dass die Schaltvorrichtung nicht mechanisch mit dem Steuerelement gekoppelt ist, so dass es nicht erforderlich ist, irgendwelche bewegbaren Teile über entsprechende Abdichtungen aus dem trockenen in den mediumdurchströmten Teil des Ventils zu führen.

In vielen Fällen weisen die Steuereinheiten Schaltvorrichtung mit einem Elektromagneten auf, wie dies etwa in der DE 25 42 663 A1 beschrieben ist. Bei solchen Ventilen ist die Spule des Elektromagneten feststehend innerhalb eines Gehäuses der Steuereinheit angeordnet und das Steuerelement als ein durch Bestromung der Spule bewegbarer Magnetanker ausgebildet. Auf diese Weise ist das Steuerelement magnetisch mit der Spule gekoppelt, so dass es sich zur Steuerung des Ventils berührungslos bewegen lässt. Diese Steuereinheiten haben sich aufgrund der mit diesen realisierbaren Medientrennung bewährt. Zudem ist es durch Variation der Spulenleistung möglich, den Magnetanker stärker oder weniger stark anzuziehen, wodurch sich verschiedene Offenstellungen des Ventils und damit dessen Durchflussmenge einstellen lässt.

Als nachteilig hat sich bei solchen Steuereinheiten deren vergleichsweise aufwendiger Aufbau mit einem mit elektrischen Versorgungsleitungen zu versehenden Elektromagneten erwiesen, weshalb diese Steuereinheiten nicht für alle Anwendungen geeignet sind.

Es sind daher auch Steuereinheiten mit einem Permanentmagneten bekannt. Bei diesen ist der Permanentmagnet dauerhaft mit dem Steuerelement magnetisch gekoppelt und über eine Schaltvorrichtung zwischen zwei Endlagen umschaltbar, wodurch das mit dem Magneten gekoppelte Steuerelement in dessen Offen- bzw. Schließstellung bewegt werden kann.

Auch wenn hierdurch eine vergleichsweise einfache, da rein mechanische Möglichkeit zur mediengetrennten Steuerung des Ventils gegeben ist, so haben solche Steuereinheiten jedoch den Nachteil, dass sich das Ventil nur zwischen zwei Zuständen, nämlich der voll geöffneten und der geschlossenen Stellung, schalten lässt. Eine Mengenverstellung der Durchflussmenge des Ventils ist über solche Steuereinheiten nicht möglich.

FR 2 244 952 offenbart eine Steuereinheit nach dem Oberbegriff des Anspruchs 1 und ein Verfahren nach dem Oberbegriff des Anspruchs 15.

US 2013/0200282 offenbart eine Steuereinheit mit einer Schaltvorrichtung die eine Endlageneinstellung zur Einstellung mindestens einer Endlage eines Magneten aufweist.

Es ist die **Augabe** der vorliegenden Erfindung, eine Steuereinheit, ein Ventil wie auch ein Verfahren zum Betätigen eines Ventils anzugeben, die sich durch einen vergleichsweise einfachen Aufbau mit der Möglichkeit einer gleichzeitigen Mengeneinstellung auszeichnen.
Diese Aufgabe wird bei einer Steuereinheit der eingangs genannten Art dadurch gelöst, dass die Schaltvorrichtung eine Endlageneinstellung zur Einstellung mindestens einer Endlage des Magneten aufweist.

Über die an der Schaltvorrichtung vorgesehene Endlageneinstellung lässt sich zumindest eine Endlage des Magneten einstellen. Durch entsprechende Einstellung dieser Endlage kann die Öffnungsstellung des Steuerelements verändert und damit die Durchflussmenge des Ventils entsprechend der jeweiligen Anwendung eingestellt werden. Da hierzu auch Permanentmagnete verwendet werden können, ergibt sich ein vergleichsweise einfacher Aufbau.
Eine Ausgestaltung der Erfindung sieht vor, dass die Endlageneinstellung eine Gewindeverbindung, insbesondere eine Feingewindeverbindung, aufweist, über welche sich die Endlage des Magneten einstellen lässt. Durch Betätigung der Gewindeverbindung kann die Endlage des Magneten auf einfache Weise durch Verdrehen zweier Bauteile eingestellt werden. Die Einstellung kann nach Art einer Voreinstellung dann bei den weiteren Schaltvorgängen der Schaltvorrichtung beibehalten werden. Über eine Feingewindeverbindung lassen sich die Einstellungen mit großer Genauigkeit vornehmen.
Eine weitere Ausgestaltung der Steuereinheit sieht vor, dass die Gewindeverbindung zwischen zwei gegeneinander verdrehbar angeordneten Elementen der Schaltvorrichtung angeordnet ist. Das Verdrehen kann über an einem der beiden Elemente angeordnete Schlüsselflächen erfolgen, die von außen her zugänglich sind, so dass es zur Mengenverstellung nicht erforderlich ist, die Steuereinheit zu demontieren.

Die Erfindung sieht vor, dass die Schaltvorrichtung derart mit dem Magneten zusammenwirkt, dass dieser durch Betätigung der Schaltvorrichtung von einer Endlage entlang eines Schaltwegs in eine andere Endlage bewegt wird. Durch einmalige Betätigung, beispielsweise durch eine Tastbetätigung der Schaltvorrichtung, kann der Magnet entlang eines vorgegebenen Schaltwegs von der einen Endlage in die andere bewegt werden.
Eine in diesem Zusammenhang konstruktiv vorteilhafte Ausgestaltung sieht vor, dass die Schaltvorrichtung als Kugelschreiber-Mechanik mit einem sich bei Betätigung der Schaltrichtung axial bewegenden Vorschubelement ausgebildet ist. Das Vorschubelement kann zum hin und her bewegen des Magneten genutzt werden. Durch Betätigung der Schaltvorrichtung bzw. der Kugelschreiber-Mechanik kann der Magnet von der einen in die andere Endlage verbracht werden. Bei erneuter Betätigung erfolgt dann eine Bewegung des Magneten in umgekehrter Richtung. Bei der Kugelschreiber-Mechanik kann es sich im Grunde genommen um die aus dem Bereich der Kugelschreiber bekannte Mechanik handeln, welche üblicherweise als wesentliche Bestandteile eine Druckhülse, eine Vorschubhülse, eine Feder sowie eine Verzahnung aufweist.
Eine konstruktive Weiterbildung sieht vor, dass die Endlageneinstellung an dem Vorschubelement angeordnet ist.
Eine weitere Ausgestaltung der Steuereinheit sieht vor, dass das Vorschubelement von zwei gegeneinander verdrehbar angeordneten Elementen gebildet wird. Die beiden Elemente können von hülsenartiger Geometrie sein.

Eine weitere Ausgestaltung sieht vor, dass die Elemente nach Art einer Teleskopspindel miteinander verbunden sind, wobei der Magnet an dem innen liegenden Element des Vorschubelements angeordnet ist. Durch Teleskopieren der beiden Elemente können die Endlagen verstellt werden.

Für einen konstruktiv einfachen Aufbau ist es von besonderem Vorteil, wenn der Magnet als Permanentmagnet ausgebildet ist. Es ist nicht erforderlich, irgendwelche elektrischen Versorgungsleitungen in den Bereich der Schaltvorrichtung zu verlegen, wodurch sich ein besonders einfacher Aufbau realisieren lässt.

Vorteilhaft ist ferner eine Ausgestaltung, nach welcher der Magnet ringförmig mit einer Ringöffnung ausgebildet ist, in welcher das Steuerelement nach Art eines Magnetankers angeordnet ist. Durch Eintauchen des Steuerelements in die Ringöffnung tritt dieses in den Bereich des Magnetfelds des Magneten ein und ist mit diesem derart gekoppelt, dass es dessen Bewegungen folgt.

Darüber hinaus wird zur **Lösung** der vorstehend genannten Aufgabe bei einem Ventil der eingangs genannten Art vorgeschlagen, dass dieses eine Steuereinheit mit einem oder mehreren der vorhergehend beschriebenen Merkmale aufweist.

Auch bei einem solchen Ventil ergeben sich die bereits im Zusammenhang mit der Steuereinheit geschilderten Vorteile.

Eine Ausgestaltung des Ventils sieht vor, dass der Magnet mit dem Steuerelement derart gekoppelt ist, dass das Steuerelement durch Betätigen der Schaltvorrichtung entlang eines Steuerwegs zwischen einer Offenstellung und einer Schließstellung hin und her bewegbar ist, in welchen das Ventil offen oder geschlossen ist. Durch Betätigen der Schaltvorrichtung wird der Magnet entlang eines vorgegebenen Schaltwegs bewegt. Der Schaltweg wird über die magnetische Kopplung auf das Steuerelement übertragen, welches dazu neigt, dem Magneten zu folgen und entlang eines Steuerwegs bewegt wird.

Vorteilhafterweise ist über die Endlageneinstellung die Offenstellung des Steuerelements einstellbar. Hierdurch lässt sich die Durchflussmenge des Ventils bzw. des Hauptventils einstellen.

Eine weitere Ausgestaltung sieht vor, dass über die Endlageneinstellung der Schaltweg des Magneten und der Steuerweg des Steuerelements derart gegeneinander verschoben werden, dass hierdurch die Offenstellung des Steuerelements einstellbar ist.

Schließlich wird im Hinblick auf eine wenig leckageanfällige Ausgestaltung vorgeschlagen, dass das Steuerelement innerhalb des mediendurchströmten Bereichs und die Schaltvorrichtung innerhalb des trockenen Bereichs des Ventils angeordnet ist. Es ist nicht erforderlich, irgendwelche beweglichen Teile aus dem trockenen in den mediendurchströmten Teil des Ventils zu führen. Es ergibt sich eine Medientrennung mit einem geringen Leckage-Risiko.

Schließlich wird zur **Lösung** der vorstehend genannten Aufgabe bei einem Verfahren der eingangs genannten Art vorgeschlagen, dass die Steuereinheit bzw. das Ventil nach einem oder mehreren der vorstehend beschriebenen Merkmale ausgebildet ist.

Auch bei einem solchen Verfahren ergeben sich die bereits im Zusammenhang mit der Steuereinheit bzw. dem Ventil beschriebenen Vorteile.

Weitere Vorteile und Einzelheiten einer erfindungsgemäßen Steuereinheit, eines eine solche Steuereinheit aufweisenden Ventils sowie eines Verfahrens zur Steuerung eines Ventils sollen nachfolgend unter Zuhilfenahme der beigefügten Zeichnungen anhand eines Ausführungsbeispiels erläutert werden. Darin zeigen:
- Fig. 1.: eine stark schematisierte Prinzipansicht zur Veranschaulichung der Funktionsweise einer Steuereinheit,
- Fig. 2: in schematisierter, geschnittener Detailansicht eine Steuereinheit, deren Magnet in einer ersten Schaltstellung dargestellt ist,
- Fig. 3: eine der Darstellung in Fig. 2 entsprechende Ansicht, wobei der Magnet in einer zweiten Schaltstellung dargestellt ist,
- Fig. 4: eine der Darstellung in Fig. 2 entsprechende Ansicht, wobei die Endlage des Magneten gegenüber der Einstellung in Fig. 2 verstellt wurde,
- Fig. 5: eine der Darstellung in Fig. 3 entsprechende Ansicht der Steuereinheit aus Fig. 4.

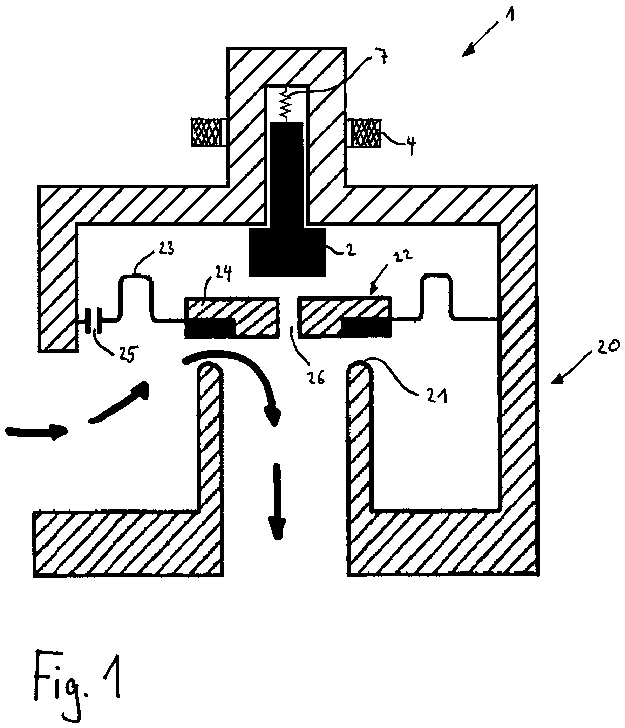

In Fig. 1 ist ein Ventil 20 mit einer zugehörigen Steuereinheit 1 schematisch in dessen Offenstellung dargestellt.

Bei dem Ventil 20 handelt es sich um ein eigenmediumbetätigtes Servoventil, welches einen im Wesentlichen ringförmigen Ventilsitz 21 und ein gegenüber dem Ventilsitz 21 bewegbares Schließelement 22 aufweist. Das Schließelement 22 besteht im Wesentlichen aus einer Membrane 23 sowie einem Tellerelement 24, welches im Mittelbereich der Membrane 23 angeordnet ist. Im Bereich des Ventileinlasses ist ferner eine Steueröffnung 25 vorgesehen. Die Steueröffnung 25 sorgt für einen Druckausgleich dahingehend, dass der oberhalb des Schließelements 22 herrschende Druck stets dem im Bereich des Ventileinlasses anliegenden Druck entspricht. Aufgrund dieser Druckverhältnisse wird das Schließelement 22 bei geschlossenem Ventil 20 über den Druck des anliegenden Mediums auf dem Ventilsitz 21 gehalten.

Zum Steuern des Ventils 20 ist oberhalb des Schließelements 22 die Steuereinheit 1 vorgesehen. In Fig. 1 ist das Ventil 20 in der geöffneten Stellung dargestellt. In dieser Stellung gibt die Steuereinheit 1 über ein als Plunger ausgebildetes Steuerelement 2 eine Druckentlastungsöffnung 26 des Schließelements 22 frei. Um das geschlossene Ventil 20 zu öffnen, wurde das Steuerelement 2 der Steuereinheit 1 von dessen Schließstellung in dessen in Fig. 1 eingezeichnete Offenstellung bewegt und hierdurch die Druckentlastungsöffnung 26 geöffnet. Da die Druckentlastungsöffnung 26 einen größeren Querschnitt als die Steueröffnung 25 aufweist, fällt dabei der Druck oberhalb des Schließelements 22 ab weshalb sich das Schließelement 22 über den Druck des anliegenden Mediums von dem Ventilsitz 21 abhebt. Hierdurch wird der Weg des einströmenden Mediums über den Ventilsitz 22 in Richtung des Ventilauslasses freigegeben und das Ventil 20 ist geöffnet, wie dies durch die Pfeile in Fig. 1 veranschaulicht werden soll. Zum Schließen des Ventils 20 wird das Steuerelement 2 nach unten bewegt und die Druckentlastungsöffnung 26 geschlossen, so dass sich das Ventil 20 dann aufgrund der geänderten Druckverhältnisse schließt.

Die Steuerung des Ventils 20 erfolgt über das Steuerelement 2 der Steuereinheit 1, über welches sich im Zusammenspiel mit der Druckentlastungsöffnung 26 die Druckverhältnisse im Inneren des Ventils 20 derart beeinflussen lassen, dass sich das Schließelement 22 über den Druck des anliegenden Mediums an den Ventilsitz 21 anlegt oder von diesem abhebt. Bei dem Ventil 20 handelt es sich daher um ein eigenmediumbetätigtes Ventil 20.

Zum Bewegen des Steuerelements 2 weist die Steuereinheit 1 einen Magneten 4 auf, mit welchem das Steuerelement 2 magnetisch gekoppelt ist, so dass sich das Steuerelement 2 durch Bewegen des Magneten 4 berührungslos bewegen lässt. Bei dem Magneten 4 handelt es sich um einen ringförmigen Permanentmagneten, der über eine in Fig. 1 nicht dargestellte Schaltvorrichtung zwischen zwei Endlagen hin und her bewegbar ist. Diese Endlagen entsprechen der Offen- bzw. Schließstellung des Ventils 20.

Fig. 1 zeigt die obere Endlage des Magneten 4. In dieser Endlage befindet sich das Steuerelement 2 in dessen Offenstellung und das Ventil 20 ist geöffnet. Der Magnet 4 ist aus der in Fig. 1 dargestellten Endlage entlang eines über die Schaltmechanik vorgegebenen Schaltwegs mechanisch in eine zweite Endlage bewegbar. Aufgrund der magnetischen Kopplung des Magneten 4 mit dem als Magnetanker ausgebildeten Steuerelement 2 folgt dieses den Bewegungen des Magneten 4 in Richtung der Schließstellung bis die Druckentlastungsöffnung 22 verschlossen und anschließend das Ventil 20 verschlossen ist. Dies ist die Schließstellung des Steuerelements 2.

Eine Besonderheit des Ventils 20 liegt in dessen mediengetrennter Ausführung. Denn nur das Steuerelement 2 liegt innerhalb des von dem Medium durchströmten Bereichs des Ventils 20. Die übrigen Teile der Steuereinheit 1 und insbesondere der Magnet 4 sowie die zu dessen Betätigung vorgesehene Schaltvorrichtung 3 liegen im trockenen Bereich des Ventils 20.

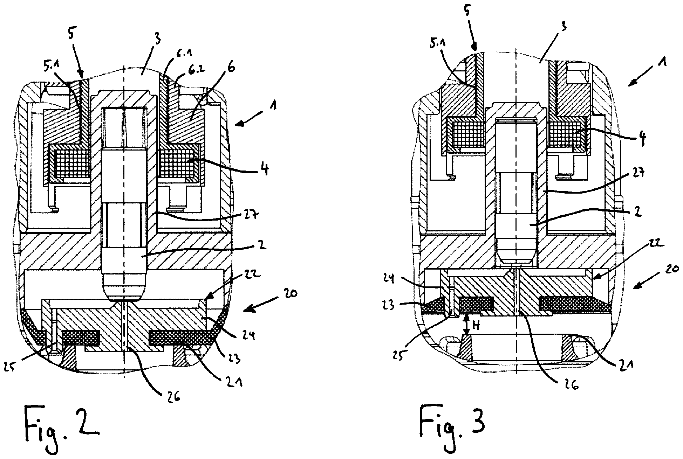

Fig. 2 zeigt weitere Einzelheiten einer erfindungsgemäß ausgebildeten Steuereinheit 1, bei der sich das Steuerelement 2 in dessen Schließstellung befindet.

Zur Betätigung des Steuerelements 2 ist im oberen Endbereich des Steuerelements 2 eine Schaltvorrichtung 3 vorgesehen, von welcher nur das untere Ende dargestellt ist. Bei der Schaltvorrichtung 3 handelt es sich um eine von Hand betätigbare Schaltvorrichtung 3, über welche der Magnet 4 zwischen den beiden Endlagen hin und her geschaltet werden kann. In Fig. 2 ist eine untere Endlage des Magneten 4 dargestellt. Nach erfolgter Betätigung der Schaltvorrichtung 3 wird der Magnet 4 entlang des Schaltwegs in die in Fig. 3 dargestellte obere Endstellung überführt. Dabei wird das mit dem Magneten 4 gekoppelte Steuerelement 2 in dessen Öffnungsstellung bewegt und das Ventil 20 geöffnet.

Das Steuerelement 2 ist in einer Ringöffnung 4.1 des Magneten 4 angeordnet und mit diesem derart gekoppelt, dass das Schließelement 2 den Bewegungen des Magneten 4 zu folgen versucht. Das Steuerelement 2 besteht daher zumindest teilweise aus Metall, kann aber insbesondere an seinem der Druckentlastungsbohrung 26 zugewandten Ende auch ein gummielastisches Dichtelement aufweisen.

Die Schaltvorrichtung 3 ist nach Art einer Kugelschreiber-Mechanik ausgebildet, wobei in den Figuren nicht alle Teile der Kugelschreiber-Mechanik dargestellt sind.

Durch Betätigung der Schaltvorrichtung 3 wandert der Magnet 4 gemäß den Darstellungen in Fig. 2 bzw. 3 von einer unteren Endlage nach oben in eine obere Endlage und nimmt dabei das Steuerelement 2 ausgehend von dessen Schließstellung in dessen Offenstellung mit. Der Abstand zwischen der ersten Endlage und der zweiten Endlage des Magneten 4 entspricht dem über die Schaltvorrichtung 3 vorgegebenen Schaltweg. Die Bewegungen des Steuerelements 2 werden innerhalb eines geschlossenen Gehäuseteils 27 geführt, wobei das Steuerelement 2 aus der in Fig. 2 dargestellten Schließstellung entgegen der Kraft einer sich spannenden Feder 7 in die in Fig. 3 dargestellte Offenstellung bewegt wird, vgl. auch Fig. 1. Hierdurch wird die Druckentlastungsöffnung 26 freigegeben und das Schließelement 22 hebt von dem Ventilsitz 21 des Ventils 20 ab. Es entsteht ein Spalt zwischen dem Schließelement 22 und dem Ventilsitz 21, dessen Höhe H die Durchflussmenge des Ventils 20 bestimmt. Um das Ventil 20 zu schließen, wird die Schaltvorrichtung 3 erneut betätigt, wonach der Magnet 4 in umgekehrter Richtung entlang des Schaltwegs in dessen ursprüngliche Endlage zurückbewegt und das Ventil 20 gemäß der Darstellung in Fig. 2 geschlossen wird.

Um die Durchflussmenge einzustellen, ist erfindungsgemäß eine Endlageneinstellung 5 vorgesehen, auf welche nachfolgend noch näher eingegangen werden wird.

Die Endlageneinstellung 5 ist als eine Gewindeverbindung 5.1 zwischen zwei gegeneinander verdrehbaren Elementen 6.1, 6.2 der Schaltvorrichtung 3 ausgebildet. Die beiden gegeneinander verdrehbar angeordneten Elemente 6.1, 6.2 sind Teil eines Vorschubelements 6 der als Kugelschreiber-Mechanik ausgebildeten Schaltvorrichtung 3, welches bei Betätigung der Schaltvorrichtung 3 entlang des Schaltwegs axial hin und her bewegt wird.

Um den Durchfluss des Ventils 20 einstellen zu können, wird die Einstellmechanik 5 manuell betätigt. Dabei werden die beiden Elemente 6.1, 6.2 gegeneinander verdreht. Das innen liegende Element 6.1 ist mit dem Magneten 4 mechanisch verbunden. Beim Ausführungsbeispiel weist das Element 6.1 hierzu eine stirnseitige Aufnahmeöffnung auf, in welcher der Magnet 4 angeordnet ist. Durch Verdrehen der beiden Elemente 6.1, 6.2, welche gemeinsam eine Art Teleskopspindel bilden, können die beiden Endlagen des Magneten 4 eingestellt werden.

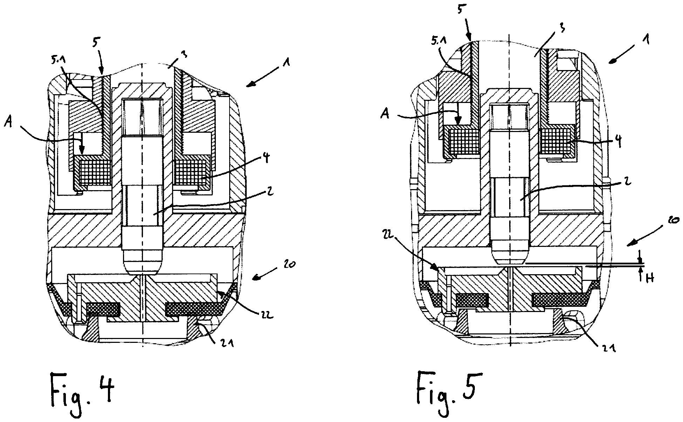

Dies wird insbesondere bei einem Vergleich der Darstellungen in Fig. 2 und Fig. 4 deutlich. Beide Figuren zeigen die Schließstellung, jedoch wurden die Endlagen des Magneten 4 bei der Steuereinheit 1 gemäß Fig. 4 über die Endlageneinstellung 5 verstellt. Im Vergleich zu den Endlagen in Fig. 2 wurden die Endlagen bei der Steuereinheit gemäß Fig. 4 um einen Abstand A verstellt. Die Endlagen des Magneten 4 liegen in Fig. 4 bzw. Fig. 5 daher näher an dem Ventilsitz 21 des Ventils 20. Beim Umschalten in die Offenstellung gemäß Fig. 5 entfernt sich der Magnet 4 und mit diesem das Steuerelement 2 daher nicht so weit von dem Ventilsitz 21 und das Schließelement 22 kann sich nicht so weit vom Ventilsitz 21 abheben, wodurch sich ein deutlich geringerer Abstand H zwischen dem Ventilsitz 21 und dem Schließelement 23 ergibt. Die Durchflussmenge ist daher deutlich geringer als dies bei der Einstellung gemäß den Fig. 2 und 3 der Fall war.

Obschon der Schaltweg des Magneten 4 immer der gleiche bleibt, ergibt sich durch Betätigung der Endlageneinstellung 5 ein veränderter Schließweg des Steuerelements 2. Nur die obere Endlage des Steuerelements 2 wird beeinflusst, da das Steuerelement 2 in dessen unterer Endstellung ohnehin an der Druckentlastungsöffnung 26 des Schließelements 22 anliegt und ein weiteres nach unten Bewegen des Magneten 4 nicht zu einer Veränderung der Schließstellung des Steuerelements 2 führt. Über die Endlageneinstellung 5 werden daher beide Endlagen des Magneten 4, aber nur eine Endstellung des Steuerelements 2, nämlich dessen Offenstellung, verändert, wodurch sich auf einfache Weise eine Mengeneinstellung der Durchflussmenge des Ventils 20 erreichen lässt.

Die vorstehend beschriebene Steuereinheit 1, das Ventil 20 wie auch das Verfahren zur Steuerung des Ventils 20 zeichnen sich durch einen vergleichsweise einfachen Aufbau bei gleichzeitiger Möglichkeit einer Mengeneinstellung aus.

### Bezugszeichen:

- 1: Steuereinheit
- 2: Steuerelement
- 3: Schaltvorrichtung
- 4: Magnet
- 5: Endlageneinstellung
- 5.1: Gewindeverbindung
- 6: Vorschubelement
- 6.1: Element
- 6.2: Element
- 7: Feder
- 20: Ventil
- 21: Ventilsitz
- 22: Schließelement
- 23: Membrane
- 24: Tellerelement
- 25: Steueröffnung
- 26: Druckentlastungsöffnung
- 27: Gehäuseteil

## Patentansprüche

1. Steuereinheit mit einem Steuerelement (2) zur Steuerung eines Ventils (20), insbesondere eines eigenmediumbetätigten Servoventils, und einer von Hand betätigbaren Schaltvorrichtung (3) zur Betätigung des Steuerelements (2), die mit dem Steuerelement (2) über einen durch Betätigung der Schaltvorrichtung (3) zwischen zwei Endlagen umschaltbaren Magneten (4) magnetisch gekoppelt ist, wobei die Schaltvorrichtung (3) als Kugelschreiber-Mechanik mit einem sich bei Betätigung der Schaltvorrichtung (3) axial bewegenden Vorschubelement (6) ausgebildet ist, **dadurch gekennzeichnet dass** die Schaltvorrichtung eine Endlageneinstellung (5) zur Einstellung mindestens einer Endlage des Magneten (4) aufweist.

2. Steuereinheit nach Anspruch 1, **dadurch gekennzeichnet, dass** die Endlageneinstellung (5) eine Gewindeverbindung (5.1), insbesondere eine Feingewindeverbindung, ausweist, über welche sich die Endlage des Magneten (4) einstellen lässt.

3. Steuereinheit nach einem der Ansprüche 1 oder 2, **dadurch gekennzeichnet, dass** die Gewindeverbindung (5.1) zwischen zwei gegeneinander verdrehbar angeordneten Elementen (6.1, 6.2) der Schaltvorrichtung (3) angeordnet ist.

4. Steuereinheit nach einem der vorhergehenden Ansprüche, **dadurch gekennzeichnet, dass** die Schaltvorrichtung (3) derart mit dem Magneten (4) zusammenwirkt, dass dieser durch Betätigung der Schaltvorrichtung (3) von einer Endlage entlang eines Schaltwegs eine andere Endlage bewegt wird.

5. Steuereinheit nach einem der vorhergehenden Ansprüche, **dadurch gekennzeichnet, dass** die Endlageneinstellung (5) an dem Vorschubelement (6) angeordnet ist.

6. Steuereinheit nach einem der vorhergehenden Ansprüche, **dadurch gekennzeichnet, dass** das Vorschubelement (6) von zwei gegeneinander verdrehbar angeordneten Elementen (6.1, 6.2) gebildet wird.

7. Steuereinheit nach Anspruch 6, **dadurch gekennzeichnet, dass** die beiden Elemente (6.1, 6.2) nach Art einer Teleskopspindel miteinander verbunden sind, wobei der Magnet (4) an dem innenliegenden Element (6.1) des Vorschubelements (6) angeordnet ist.

8. Steuereinheit nach einem der vorhergehenden Ansprüche, **dadurch gekennzeichnet, dass** der Magnet (4) als Permanentmagnet ausgebildet ist.

9. Steuereinheit nach einem der vorhergehenden Ansprüche, **dadurch gekennzeichnet, dass** der Magnet (4) ringförmig mit einer Ringöffnung (4.1) ausgebildet ist, in welcher das Steuerelement (2) nach Art eines Magnetankers angeordnet ist.

10. Ventil, insbesondere Servoventil, mit einem Ventilsitz (21) und einem gegenüber dem Ventilsitz (21) bewegbar angeordneten Schließelement (22) dessen Bewegungen über eine Steuereinheit (1) des Ventils steuerbar sind,
**dadurch gekennzeichnet,**
**dass** die Steuereinheit (1) nach einem der vorhergehenden Ansprüche ausgebildet ist.

11. Ventil nach Anspruch 10, **dadurch gekennzeichnet, dass** der Magnet (4) mit dem Steuerelement (2) derart gekoppelt ist, dass das Steuerelement (2) durch Betätigen der Schaltvorrichtung (3) entlang eines Steuerwegs zwischen einer Offenstellung und einer Schließstellung hin und her bewegbar ist, in welchen das Ventil (20) offen oder geschlossen ist.

12. Ventil nach Anspruch 10 oder Anspruch 11, **dadurch gekennzeichnet, dass** über die Endlageneinstellung (5) die Offenstellung des Steuerelements (2) einstellbar ist.

13. Ventil nach einem der Ansprüche 10 bis 12, **dadurch gekennzeichnet, dass** über die Endlageneinstellung (5) der Schaltweg des Magneten (4) und der Steuerweg des Steuerelements (2) derart gegeneinander verschoben werden, dass hierdurch die Offenstellung des Steuerelements (2) einstellbar.

14. Ventil nach einem der Ansprüche 10 bis 13, **dadurch gekennzeichnet, dass** das Steuerelement (2) innerhalb des mediendurchströmten Bereichs und die Schaltvorrichtung (3) innerhalb des trockenen Bereichs des Ventils (20) angeordnet ist.

15. Verfahren zur Steuerung eines Ventils (20), insbesondere eines Servoventils, mit einem Ventilsitz (21) und einem gegenüber dem Ventilsitz (21) bewegbar angeordneten Schließelement (22) dessen Bewegungen zur Steuerung des Ventils (20) über eine Steuereinheit (1) nach einem der Ansprüche 1 bis 9 steuerbar sind,
**dadurch gekennzeichnet,**
**dass** mindestens eine Endlage des Magneten (4) vor Betätigung des Ventils (20) eingestellt wird.

## Claims

1. Control unit having a control element (2) for controlling a valve (20), in particular an inherent-medium-actuated servovalve, and having a manually actuatable switching device (3) for actuating the control element (2), said switching device being coupled to the control element (2) magnetically via a magnet (4), which can be switched over between two end positions by actuation of the switching device (3), wherein the switching device (3) is designed in the form of a ballpoint pen mechanism with an advancement element (6) which moves axially upon actuation of the switching device (3), **characterized in that** the switching device has an end position adjustment (5) for adjusting at least one end position of the magnet (4).

2. Control unit according to Claim 1, **characterized in that** the end-position adjustment (5) has a threaded connection (5.1), in particular a fine thread connection, via which the end position of the magnet (4) can be adjusted.

3. Control unit according to either of Claims 1 or 2, **characterized in that** the threaded connection (5.1) is arranged between two elements (6.1, 6.2) of the switching device (3), said elements being arranged such that they can be rotated in opposite directions in relation to one another.

4. Control unit according to one of the preceding claims, **characterized in that** the switching device (3) interacts with the magnet (4) such that the latter is moved, by actuation of the switching device (3), from one end position another end position along a switching path.

5. Control unit according to one of the preceding claims, **characterized in that** the end-position adjustment (5) is arranged on the advancement element (6).

6. Control unit according to one of the preceding claims, **characterized in that** the advancement element (6) is formed by two elements (6.1, 6.2) which are arranged such that they can be rotated in opposite directions in relation to one another.

7. Control unit according to Claim 6, **characterized in that** the two elements (6.1, 6.2) are connected to one another in the manner of a telescopic spindle, wherein the magnet (4) is arranged on the inner element (6.1) of the advancement element (6).

8. Control unit according to one of the preceding claims, **characterized in that** the magnet (4) is designed in the form of a permanent magnet.

9. Control unit according to one of the preceding claims, **characterized in that** the magnet (4) is designed in annular form with an annular opening (4.1), in which the control element (2) is arranged in the manner of a magnet armature.

10. Valve, in particular servovalve, having a valve seat (21) and a closing element (22) which is arranged such that it can be moved in relation to the valve seat (21) and the movements of which can be controlled via a control unit (1) of the valve, **characterized in that** the control unit (1) is designed in accordance with one of the preceding claims.

11. Valve according to Claim 10, **characterized in that** the magnet (4) is coupled to the control element (2) such that, by actuation of the switching device (3), the control element (2) can be moved back and forth along a control path between an open position and a closed position, in which the valve (20) is open or closed.

12. Valve according to Claim 10 or Claim 11, **characterized in that** the open position of the control element (2) can be adjusted via the end-position adjustment (5).

13. Valve according to one of Claims 10 to 12, **characterized in that** the end-position adjustment (5) displaces the switching path of the magnet (4) and the control path of the control element (2) in relation to one another such that the open position of the control element (2) can be adjusted as a result.

14. Valve according to one of Claims 10 to 13, **characterized in that** the control element (2) is arranged within the media-throughflow region, and the switching device (3) is arranged within the dry region, of the valve (20).

15. Method of controlling a valve (20), in particular a servovalve, having a valve seat (21) and a closing element (22) which is arranged such that it can be moved in relation to the valve seat (21) and the movements of which, for controlling the valve (20), can be controlled via a control unit (1) according to one of Claims 1 to 9, **characterized in that** at least one end position of the magnet (4) is adjusted prior to the valve (20) being actuated.

## Revendications

1. Unité de commande avec un élément de commande (2) pour la commande d'une soupape (20), en particulier d'une servo-soupape actionnée par son propre fluide, et un dispositif de commutation (3) actionnable à la main pour l'actionnement de l'élément de commande (2), qui est couplé magnétiquement à l'élément de commande (2) au moyen d'un aimant (4) commutable entre deux positions finales par actionnement du dispositif de commutation (3), dans laquelle le dispositif de commutation (3) est réalisé sous forme de mécanisme de stylo à bille avec un élément d'avance (6) se déplaçant axialement lors de l'actionnement du dispositif de commutation (3), **caractérisée en ce que** le dispositif de commutation présente un réglage de positions finales (5) pour le réglage d'au moins une position finale de l'aimant (4).

2. Unité de commande selon la revendication 1, **caractérisée en ce que** le réglage de positions finales (5) présente une liaison filetée (5.1), en particulier une liaison filetée à pas fin, par laquelle la position finale de l'aimant (4) peut être réglée.

3. Unité de commande selon une des revendications 1 ou 2, **caractérisée en ce que** la liaison filetée (5.1) est disposée entre deux éléments (6.1, 6.2) du dispositif de commutation (3) agencés de façon rotative l'un par rapport à l'autre.

4. Unité de commande selon l'une quelconque des revendications précédentes, **caractérisée en ce que** le dispositif de commutation (3) coopère avec l'aimant (4) de telle manière que celui-ci soit déplacé d'une position finale une autre position finale le long d'une course de commutation par actionnement du dispositif de commutation (3).

5. Unité de commande selon l'une quelconque des revendications précédentes, **caractérisée en ce que** le réglage de positions finales (5) est disposé sur l'élément d'avance (6).

6. Unité de commande selon l'une quelconque des revendications précédentes, **caractérisée en ce que** l'élément d'avance (6) est formé par deux éléments (6.1, 6.2) agencés de façon rotative l'un par rapport à l'autre.

7. Unité de commande selon la revendication 6, **caractérisée en ce que** les deux éléments (6.1, 6.2) sont assemblés l'un à l'autre à la manière d'une broche télescopique, dans laquelle l'aimant (4) est disposé sur l'élément monté intérieurement (6.1) de l'élément d'avance (6).

8. Unité de commande selon l'une quelconque des revendications précédentes, **caractérisée en ce que** l'aimant (4) est formé par un aimant permanent.

9. Unité de commande selon l'une quelconque des revendications précédentes, **caractérisée en ce que** l'aimant (4) est de forme annulaire avec une ouverture d'anneau (4.1), dans laquelle l'élément de commande (2) est agencé à la manière d'un induit magnétique.

10. Soupape, en particulier servo-soupape, avec un siège de soupape (21) et un élément de fermeture (22) disposé de façon mobile par rapport au siège de soupape (21), dont les mouvements peuvent être commandés par une unité de commande (1), **caractérisée en ce que** l'unité de commande (1) est réalisée selon l'une quelconque des revendications précédentes.

11. Soupape selon la revendication 10, **caractérisée en ce que** l'aimant (4) est couplé à l'élément de commande (2) de telle manière que l'élément de commande (2) soit mobile en alternance, par actionnement du dispositif de commutation (3), le long d'une course de commande entre une position d'ouverture et une position de fermeture, dans lesquelles la soupape (20) est ouverte ou fermée.

12. Soupape selon la revendication 10 ou la revendication 11, **caractérisée en ce que** la position d'ouverture de l'élément de commande (2) est réglable par le réglage de positions finales (5).

13. Soupape selon l'une quelconque des revendications 10 à 12, **caractérisée en ce que** la course de commutation de l'aimant (4) et la course de commande de l'élément de commande (2) sont décalées l'une par rapport à l'autre par le réglage de positions finales (5), de telle manière que la position d'ouverture de l'élément de commande (2) soit réglable de cette manière.

14. Soupape selon l'une quelconque des revendications 10 à 13, **caractérisée en ce que** l'élément de commande (2) est disposé à l'intérieur de la région parcourue par le fluide et le dispositif de commutation (3) est disposé à l'intérieur de la région sèche de la soupape (20).

15. Procédé de commande d'une soupape (20), en particulier d'une servo-soupape, avec un siège de soupape (21) et un élément de fermeture (22) disposé de façon mobile par rapport au siège de soupape (21), dont les mouvements pour la commande de la soupape (20) peuvent être commandés par une unité de commande (1) selon l'une quelconque des revendications 1 à 9, **caractérisé en ce que** l'on règle au moins une position finale de l'aimant (4) avant l'actionnement de la soupape (20).
